# FASCICULE DE BREVET EUROPEEN

(11) **EP 2 100 653 B1**
(45) Date de publication et mention de la délivrance du brevet: **31.08.2011**
(21) Numéro de dépôt: 09290139.6
(22) Date de dépôt: 27.02.2009
(51) Int. Cl.: B01D 35/30

(54) **Dispositif de filtrage pour aéronef avec organe de détrompage et d'entrainement de la cartouche**
Filtervorrichtung für Luftschiff mit Sicherungs- und Führungsorgan für den Filtereinsatz
Filter device for aircraft with an element for polarising and inserting the cartridge

(30) Priorité: 14.03.2008 FR 0801411
(43) Date de publication de la demande: 16.09.2009
(73) Titulaire: Messier-Bugatti-Dowty, 78140 Velizy Villacoublay (FR)
(72) Inventeur: Treyz, Alain, 92160 Antony (FR)
(74) Mandataire: Parzy, Benjamin Alain

(56) Documents cités:
- DE-A1- 19 703 648
- US-A- 3 023 906
- US-A- 5 711 872
- US-A1- 2007 045 171

## Description

L'invention concerne un dispositif de filtrage pour circuit hydraulique d'aéronef.

### ARRIERE-PLAN DE L'INVENTION

On connaît des dispositifs de filtrage pour circuit hydraulique d'aéronef comportant au moins un filtre à cartouche qui est rapporté de façon démontable sur un bloc hydraulique. Le filtre comporte une cuve qui reçoit une cartouche de filtrage. La cuve est vissée sur le bloc hydraulique et est serrée avec un couple suffisant pour assurer une tenue mécanique en service du filetage, et notamment éviter tout fretting.

Compte tenu des dimensions des aéronefs envisagés, les cuves atteignent des dimensions appréciables, de sorte que le couple de serrage augmente en proportion, ce qui pose divers problèmes. D'une part, la mise en place d'un tel couple entraîne l'usage de clés dynamométriques de taille et de poids importants, difficiles à manipuler, surtout dans des endroits peu accessibles des soutes de l'aéronef. Ces clés obligent en outre l'opérateur à développer des efforts importants. D'autre part, un tel couple de serrage conduit à des contraintes importantes sur le taraudage du bloc hydraulique. Compte tenu du cyclage en fatigue provoqué par les divers vissages et revissages de la cuve, ces contraintes importantes constituent un risque de dégradation du taraudage du bloc hydraulique 1. Ces risques sont aggravés par le fait que le bloc hydraulique est généralement réalisé dans des matériaux comme l'aluminium ou le titane dans lesquels les taraudages sont connus pour s'user rapidement, même en prévoyant des traitements de projection.

Le document US 3023906 décrit un dispositif de filtrage pour véhicule comprenant un bloc hydraulique adapté à recevoir un filtre amovible qui comporte une cuve recevant une cartouche. Le filtre amovible est plaqué sur le bloc hydraulique grâce à un tirant traversant le filtre, le tirant étant vissé sur un insert lui-même vissé dans le bloc hydraulique.

### OBJET DE L'INVENTION

L'invention a pour objet un dispositif de filtrage ne présentant pas l'inconvénient précité.

### BREVE DESCRIPTION DE L'INVENTION

Selon l'invention, on propose un dispositif de filtrage pour aéronef comprenant un bloc hydraulique adapté à recevoir un filtre amovible qui comporte une cuve recevant une cartouche. Selon l'invention, un insert est vissé avec serrage dans un taraudage du bloc hydraulique, l'insert comportant lui-même un taraudage dans lequel est engagé un filetage de la cuve, le bloc hydraulique comportant en outre des moyens d'arrêt en rotation de la cuve une fois celle-ci vissée sur l'insert.

Le taraudage réalisé directement dans le bloc hydraulique et qui reçoit l'insert est certes soumis à un serrage important, mais dans la mesure où l'insert n'est pas destiné à être démonté en service, le taraudage n'est plus soumis à des vissages et des dévissages fréquents, ce qui lui évite de subir une détérioration de fatigue. Quant au taraudage de l'insert qui reçoit le filetage de la cuve, il n'est pas soumis à des serrages importants, puisque la cuve est bloquée en rotation vis-à-vis de l'insert de sorte qu'il n'y a aucun risque de dévissage de la cuve de sorte qu'il est inutile de serrer la cuve sur l'insert. Les démontages fréquents de la cuve ne risquent donc pas de fatiguer le taraudage de l'insert.

Ainsi, l'utilisation d'un insert permet d'éviter que le couple de serrage important ne couple ses effets aux cyclages en fatigue provoqué par les vissages et dévissages de la cuve du filtre. De plus, on peut choisir l'insert dans un matériau (par exemple de l'acier inoxydable) qui supporte beaucoup mieux les fréquents vissages/dévissages que les matériaux habituellement utilisés pour la fabrication des blocs hydrauliques (aluminium ou titane).

### BREVE DESCRIPTION DES DESSINS

L'invention sera mieux comprise à la lumière de la description qui suit en référence aux figures des dessins annexés parmi lesquelles :
- la figure 1 est une vue en coupe longitudinale d'une cuve de filtre d'un dispositif de filtrage selon un mode particulier de réalisation de l'invention ;
- la figure 2 est une vue analogue à celle de la figure 1, montrant la cuve de la figure 1 dans laquelle une cartouche a été introduite ;
- la figure 3 est une vue en coupe longitudinale du dispositif de filtrage dans lequel la cuve du filtre est présentée en regard du bloc hydraulique alors que la cuve ne contient aucune cartouche ;
- la figure 4 est une vue en coupe du dispositif de filtrage selon l'invention avec le filtre de la figure 3 en place sur le bloc hydraulique ;
- la figure 5 est une vue en coupe selon la ligne V-V de la figure 4 ;
- la figure 6 est une vue en coupe selon la ligne VI-VI de la figure 4 ;
- la figure 7 est une vue en perspective d'une épingle équipant la cuve de la figure 1.

### DESCRIPTION DETAILLEE DE L'INVENTION

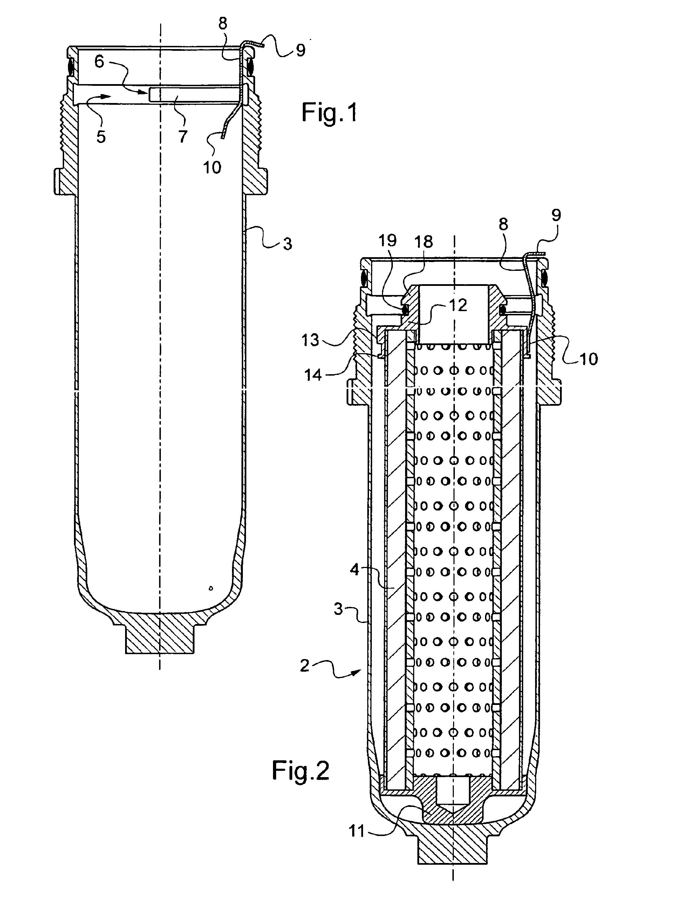

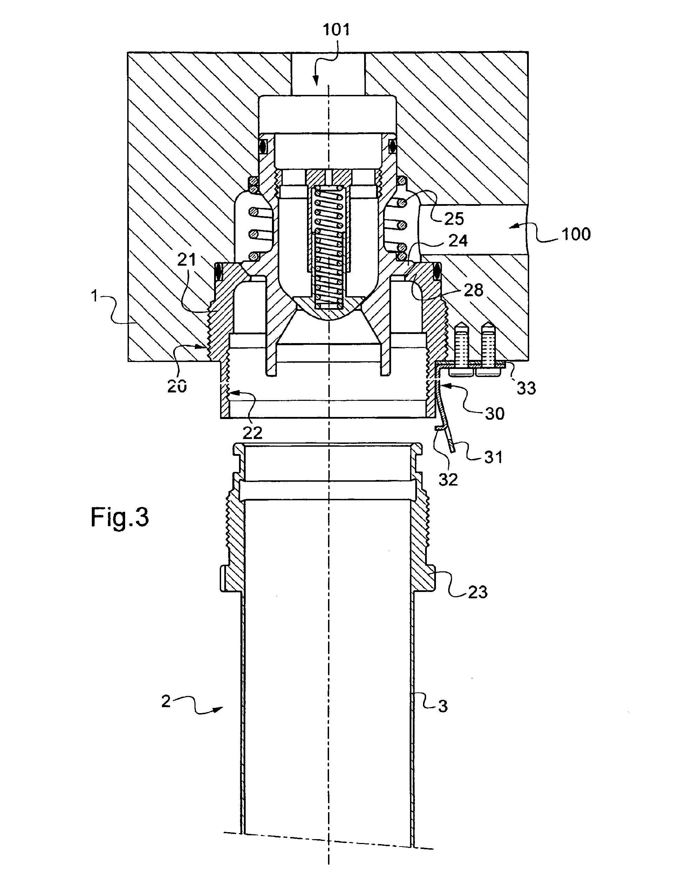

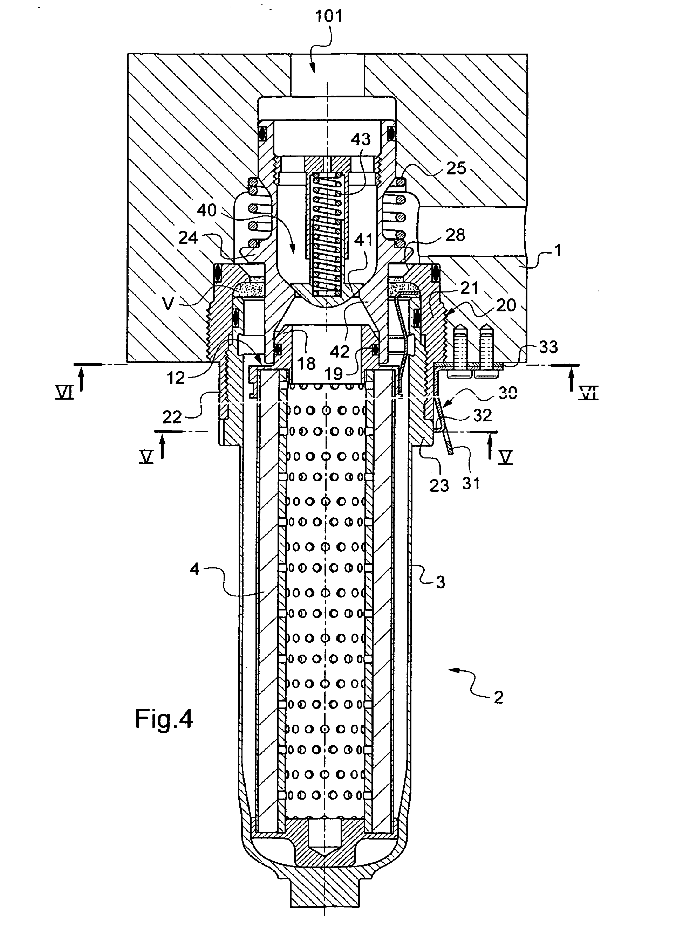

Selon l'invention, et en référence aux figures 1 et 2, le dispositif de filtrage pour circuit hydraulique d'aéronef comporte un filtre 2 comportant une cuve 3 qui reçoit une cartouche de filtrage 4. Le filtre 2 est destiné à être rapportée sur un bloc hydraulique 1 visible aux figures 3 et 4, et réalisé ici en titane.

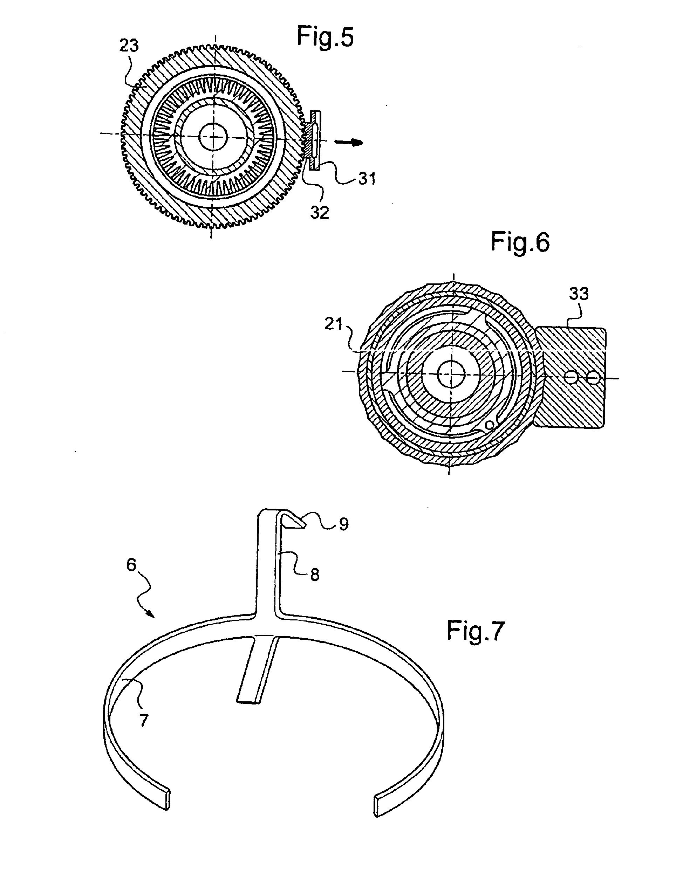

La cuve 3 comporte une gorge annulaire interne 5 dans laquelle est insérée une épingle 6, plus particulièrement visible à la figure 7. L'épingle 6 est réalisée ici en acier à ressort, et comprend une ceinture 7 engagée élastiquement dans la gorge annulaire interne 5 de la cuve 3. Un détrompeur 8 avec une extrémité recourbée 9 s'étend depuis la ceinture 7 vers le haut de sorte que lorsque l'épingle 6 est en position sur la cuve, l'extrémité recourbée 9 passe par-dessus le rebord de la cuve 3 et dépasse radialement de celui-ci, comme cela est visible à la figure 1. Par ailleurs, un doigt 10 s'étend de la ceinture vers le fond de la cuve en étant recourbé vers le centre de la cuve 3.

Revenant aux figures 1 et 2, la cartouche 4 comporte un pied 11 qui centre la cartouche 4 dans la cuve 3, ainsi qu'un chapeau 12 creux comportant une jupe 13 qui coiffe l'extérieur de la cartouche, et qui se termine par un redan 14. Lorsque l'on met en place la cartouche 4 dans la cuve 3, le doigt 10 de l'épingle 6 est repoussé vers la paroi de la cuve 3, ce qui a pour effet de tordre localement la ceinture 7, ce qui provoque la rétraction de l'extrémité recourbée 9 du détrompeur 8 de sorte que l'extrémité recourbée 9 ne dépasse plus radialement du rebord de la cuve 3, comme cela est bien visible à la figure 2.

L'épingle 6 joue donc un double rôle :
- elle empêche le montage du filtre 2 sur le bloc hydraulique 1 si une cartouche n'a pas préalablement été mise en place dans la cuve 3. Dans cette situation illustrée à la figure 3, l'extrémité recourbée 9 empêche tout vissage de la cuve 3 sur le bloc hydraulique 1 ;
- elle retient la cartouche 4 dans la cuve 3 lors du démontage de celle-ci, par coopération de l'extrémité du doigt 10 avec le redan 14 du chapeau 12 qui forme un obstacle venant buter contre l'extrémité du doigt 10, ce qui lors du démontage du filtre, oblige la cartouche 4 à venir avec la cuve 3. Pour retirer la cartouche 4 de la cuve 3 lorsque le filtre 2 est démonté du bloc hydraulique 1, il convient de retirer l'épingle 6, ou à tout le moins d'écarter le doigt 10 du redan 14.

Selon l'invention, et en référence aux figures 3 et 4, le bloc hydraulique 1 comporte un taraudage 20 dans lequel un insert 21 réalisé ici en acier inoxydable est vissé et serré avec un couple de serrage suffisamment important pour assurer la tenue mécanique en service des filets. L'insert 21 n'est normalement pas démonté en service, de sorte que le taraudage 20 ne subit pas de cyclage de fatigue de vissage/dévissage.

Pour assurer ce vissage, une languette 33 est vissée sur le bloc hydraulique 1 en regard d'une surface périphérique de l'insert 21 qui est crantée. Comme cela est particulièrement visible à la figure 6, la languette 33 coopère avec la surface périphérique crantée de l'insert 21 pour empêcher tout dévissage de ce dernier.

La cuve 3 est elle vissée non pas sur le bloc hydraulique 1, mais dans un taraudage 22 de l'insert 21. Ici, la cuve 3 est vissée jusqu'à contact d'un épaulement 23 de la cuve 3 contre l'insert 21.

Revenant à la figure 3, on observe qu'une lame ressort 30 est vissée sur le bloc hydraulique (ici au moyen des mêmes vis qui tiennent la languette 33) pour présenter, sur une partie en porte à faux 31, une patte dentée 32 qui s'étend vers l'épaulement 23 de façon à coopérer avec des dents périphériques de ce dernier. Lorsque le filtre est en position sur le bloc hydraulique 1, comme cela est illustré à la figure 5, l'interpénétration des dents de l'épaulement 23 et des dents de la patte dentée 32 assure un arrêt en rotation de la cuve 3 vis-à-vis du bloc hydraulique 1. Cette interpénétration est illustrée à la figure 5. La lame ressort 30 est suffisamment rigide pour qu'en service, les vibrations diverses et les chocs ne puissent provoquer la désolidarisation de la patte dentée 32 et de l'épaulement 23, de sorte que la cuve ne peut se dévisser de l'insert 21. Il suffira d'écarter élastiquement la patte dentée 32 de l'épaulement 23, comme illustré par la flèche sur la figure 5, pour permettre le vissage ou le dévissage de la cuve 3.

En variante, les dents de la patte dentée 32 pourront présenter une forme propre à permettre l'écartement de la patte dentée lors de la rotation de la cuve au cours d'un dévissage de celle-ci.

Ainsi, il est inutile de serrer fortement la cuve 3 dans le taraudage de l'insert 21, puisque la cuve ne peut se dévisser en service. Le taraudage 22 qui reçoit la cuve 3 est donc certes soumis à des vissages et dévissages fréquents, mais sans serrage, de sorte que ces vissages/dévissages ne risquent pas de dégrader le taraudage 22 en fatigue.

Ainsi, le taraudage 20 du bloc hydraulique 1, réalisé dans du titane, est soumis à un effort important, mais ne subit aucun vissage/dévissage, et ne risque donc pas de s'abîmer s'il est bien dimensionné. Quant au taraudage 22 réalisé dans l'insert 21, il subit certes des vissages/dévissages, mais sans effort de serrage significatif, de sorte qu'il ne risque pas non plus de se détériorer. La réalisation de l'insert dans de l'acier inoxydable permet de proposer un taraudage peu sensible à l'usure due aux vissages/dévissages.

Selon une disposition particulière, l'insert 21 forme un siège 28 pour un clapet 24 qui est mobile axialement dans le bloc hydraulique 1. Comme cela est visible à la figure 3, lorsque le filtre n'est pas en place sur le bloc hydraulique 1, le clapet 24 coopère avec le siège 28 pour fermer une communication entre un premier port 100 du bloc hydraulique 1 et l'intérieur de l'insert 21. Par contre, lorsque le filtre est en place, comme illustré à la figure 4, l'extrémité basse du clapet 24 vient coiffer un têton 18 du chapeau 12 de la cartouche 4 et est repoussé à l'encontre d'un ressort 25 par le chapeau 12 pour ouvrir un passage entre le port 100 et l'extérieur de la cartouche 4. On remarquera qu'un joint d'étanchéité 19 s'étend entre le têton 18 et le clapet 24, qui a tendance, lors du démontage du filtre, à retenir la cartouche sur le clapet 24. Le doigt 10 de l'épingle 6 a précisément pour fonction de lutter contre cette retenue et forcer la cartouche à venir avec la cuve lors du dévissage de celle-ci.

Sur cette même figure, on constate que le clapet 24 est creux et forme un canal vers un deuxième port 101 du bloc hydraulique 1 mettant en communication l'intérieur de la cartouche 4 et le deuxième port 101. Le fluide hydraulique circule ainsi du premier port 100 vers le second port 101 en ayant passé au travers de la cartouche 4. Pour éviter tout retour de fluide vers le premier port 100, le clapet 24 est équipé intérieurement d'un organe anti-retour 40 comportant un clapet anti-retour 41 poussé par un ressort 43 vers un siège 42 réalisé dans le creux du clapet 24. Le clapet anti-retour 41 est repoussé par le fluide provenant de l'intérieur de la cartouche à l'encontre du ressort 43.

On remarquera que lorsque le filtre 2 est en place sur le bloc hydraulique 1, un volume mort V de fluide (repéré par des points sur la figure 4) s'étend entre l'extrémité haute de la cuve 3 et le siège 28 de l'insert 21.

Lorsque l'on retire le filtre 2 du bloc hydraulique 1, tout le fluide hydraulique contenu dans la cuve vient avec le filtre 2, tandis que tout le fluide contenu dans le bloc hydraulique 1 au dessus du siège 28 reste dans le bloc hydraulique en étant retenu par le clapet 24 qui se ferme. Cependant, le fluide contenu dans le volume mort V, s'étendant entre le siège 28 et l'extrémité haute de la cuve 3 n'est ni contenu dans la cuve 3 ni retenu par le clapet 24.

Pour éviter que le volume mort V ne se déverse vers l'extérieur lors du démontage du filtre, et selon l'invention, le volume occupé par le clapet 24 dans la cuve 3 lorsque le filtre 2 est en place sur le bloc hydraulique 1 est prévu pour être plus important que le volume mort V. De cette façon, lors du dévissage de la cuve 3, le fluide contenu dans le volume mort V prend progressivement place dans la cuve 3 au fur et à mesure que le clapet 24 sort de la cuve 3 et libère ainsi dans la cuve 3 du volume disponible pour recevoir ce fluide. En s'assurant que le volume libéré est plus grand que le volume mort V, on évite tout déversement de fluide vers l'extérieur lors du démontage du filtre 2, mis à part quelques gouttes.

L'invention n'est pas limitée à ce qui vient d'être décrit, mais bien au contraire englobe toute variante entrant dans le cadre défini par les revendications.

En particulier, bien que l'on ait décrit l'organe d'immobilisation en rotation de la cuve comme comprenant une patte dentée qui coopérait avec un épaulement denté de la cuve, on pourra prévoir tout autre organe équivalent, comme par exemple un doigt escamotable rentrant dans un creux réalisé dans la paroi de la cuve.

## Revendications

1. Dispositif de filtrage pour aéronef comprenant un bloc hydraulique (1) et un filtre amovible (2) qui comporte une cuve (3) recevant une cartouche (4), **caractérisé en ce qu'**un insert (21) est vissé dans un taraudage (20) du bloc hydraulique avec serrage, la cuve présentant un filetage en périphérie externe pour permettre son vissage dans un taraudage (22) de l'insert, le dispositif comportant en outre des moyens d'arrêt en rotation (23,32) de la cuve une fois celle-ci vissée dans l'insert.

2. Dispositif de filtrage selon la revendication 1, dans lequel les moyens d'arrêt en rotation comprennent d'une part une portion dentée (23) de la cuve, et d'autre part une patte dentée (32) solidaire du bloc hydraulique qui coopère avec la portion dentée de la cuve pour arrêter la cuve en rotation sur le bloc hydraulique.

3. Dispositif de filtrage selon la revendication 1, dans lequel le bloc hydraulique (1) est en titane, et l'insert (21) est en acier inoxydable.

## Claims

1. An aircraft filter device comprising a hydraulic block (1) and a removable filter (2) comprising a vessel (3) that receives a cartridge (4), the device being **characterized in that** an insert (21) is screwed tightly into an internal thread (20) of the hydraulic block, the vessel having a thread (22) extending on an external periphery thereof for allowing it to be screwed into an internal thread (22) of the insert, the device also including rotation-preventing means (23, 32) for preventing the vessel from moving in rotation once it has been screwed into the insert.

2. A filter device according to claim 1, wherein the rotation-preventing means comprise firstly a toothed portion (23) of the vessel, and secondly a toothed tab (32) secured to the hydraulic block and co-operating with the toothed portion of the vessel to prevent the vessel from moving in rotation relative to the hydraulic block.

3. A filter device according to claim 1, wherein the hydraulic block (1) is made of titanium, and the insert (21) is made of stainless steel.

## Patentansprüche

1. Filtervorrichtung für ein Luftfahrzeug, umfassend einen Hydraulikblock (1) und einen lösbaren Filter (2), der einen Behälter (3) umfasst, der eine Kartusche (4) aufnimmt, **dadurch gekennzeichnet, dass** ein Einsatz (21) in ein Innengewinde (20) des Hydraulikblocks fest eingeschraubt ist, wobei der Behälter am Außenumfang ein Gewinde aufweist, um sein Einschrauben in ein Innengewinde (22) des Einsatzes zu ermöglichen, wobei die Vorrichtung ferner Antirotationsmittel (23, 32) zum Arretieren des Behälters in Drehrichtung umfasst, sobald dieser in den Einsatz geschraubt wurde.

2. Filtervorrichtung nach Anspruch 1, wobei die Antirotationsmittel einerseits einen gezahnten Abschnitt (23) des Behälters und andererseits eine fest mit dem Hydraulikblock verbundene gezahnte Lasche (32) umfassen, die mit dem gezahnten Abschnitt des Behälters zusammenwirkt, um den Behälter am Hydraulikblock in Drehrichtung zu arretieren.

3. Filtervorrichtung nach Anspruch 1, wobei der Hydraulikblock (1) aus Titan und der Einsatz (21) aus rostfreiem Stahl ist.
